# EUROPÄISCHE PATENTSCHRIFT

(11) **EP 3 654 222 B1**
(45) Veröffentlichungstag und Bekanntmachung des Hinweises auf die Patenterteilung: **10.01.2024**
(21) Anmeldenummer: 19206376.6
(22) Anmeldetag: 30.10.2019
(51) Int. Cl.: H04L 9/00, G06F 21/64, H04L 9/32

(54) **FAHRZEUG, NETZWERKKOMPONENTE, VERFAHREN, COMPUTERPROGRAMM UND VORRICHTUNG ZUM GENERIEREN EINER KENNUNG FÜR EINEN AUSRÜSTUNGSZUSTAND EINES FAHRZEUGS**
VEHICLE, NETWORK COMPONENT, METHOD, COMPUTER PROGRAM, AND DEVICE FOR GENERATING A IDENTIFIER FOR AN EQUIPMENT STATE OF A VEHICLE
VÉHICULE, COMPOSANT DE RÉSEAU, PROCÉDÉ, PROGRAMME INFORMATIQUE ET DISPOSITIF DE GÉNÉRATION D'UN IDENTIFICATEUR POUR UN ÉTAT D'ÉQUIPEMENT D'UN VÉHICULE

(30) Priorität: 16.11.2018 DE 102018219719
(43) Veröffentlichungstag der Anmeldung: 20.05.2020
(73) Patentinhaber: Volkswagen AG, 38440 Wolfsburg (DE)
(72) Erfinder: Schaaf, Klaus, 38116 Braunschweig (DE); Härtel, Janine, 20255 Hamburg (DE); Bartkowiak, Nicolai, 31180 Giesen (DE)

(56) Entgegenhaltungen:
- DE-A1-102016 007 472
- DE-A1-102017 204 538
- US-A1- 2018 018 723
- Carsten Stöcker: "Implementing first Industry 4.0 Use Cases with DAG Tangle - Machine Tagging for Digital Twins", , 24. Juni 2017 (2017-06-24), XP055541160, Gefunden im Internet: URL:https://medium.com/@cstoecker/implemen ting-first-industry-4-0-use-cases-with-iot a-dag-tangle-machine-tagging-for-digital-t wins-baf1943c499d [gefunden am 2019-01-11]

## Beschreibung

Die vorliegende Erfindung bezieht sich auf ein Fahrzeug, eine Netzwerkkomponente, ein Verfahren, ein Computerprogramm und eine Vorrichtung zum Generieren einer Kennung für einen Ausrüstungszustand eines Fahrzeugs, insbesondere aber nicht ausschließlich, auf ein Konzept zur Nutzung einer "Distributed Ledger Technology" (DLT, dezentral geführte Kontobücher/Transaktionsdatenbank) basierend auf einem ein- oder mehrdimensionalen azyklischen Graphen (z.B. Blockchain, Directed Acyclic Graph (DAG)) zur sicheren und eindeutigen Nachweisbarkeit von Softwareinhalten, Hardware-Ständen und externen Parametern bei Fahrzeugen.

Fahrzeuge liefern und benötigen heutzutage vielerlei Daten, die von internen Steuergeräten, auch ECUs (von Electronic Control Unit, Elektronische Kontrolleinheit), ausgewertet oder verarbeitet werden, bzw. Programmdaten, die auf den ECUs ausgeführt werden.

Es ist absehbar, dass anstehende Veränderungen in der Automobilindustrie hinsichtlich einer stark zunehmenden Dominanz von Software in Fahrzeugen es erforderlich machen werden, eine vertrauenswürdige Umgebung zu schaffen, um die Nachweisbarkeit der Fahrzeugsoftwarehistorie und des Fahrzeugzustandes zu gewährleisten. Hersteller von Fahrzeugen (auch engl. Original Equipment Manufacturers (OEMs)) müssen im Falle eines Unfalles oder einer möglichen Software Veränderung vor staatlichen Behörden, beispielsweise einem Kraftfahrtbundesamt (KBA), über den Fahrzeugzustand (beispielsweise die Softwareversion/-inhalt) zum exakten Zeitpunkt (Zeitstempel/Timestamp) eine vertrauenswürdige Auskunft geben können. Das kommt besonders dann zum Tragen, wenn es in den nächsten Jahren zum teilautonomen und vollautomatischen Fahren kommt. Auch bei der Erweiterung von fahrzeugbezogenen Services (Diensten), wie Funktionen auf Nachfrage (auch engl. Function on Demand (FoD)), Nachladen von Funktionen/Software über die Luftschnittstelle (Over The Air (OTA)) und Freischaltung von Softwaremodulen (jegliche Steuergeräte im Fahrzeug) muss dokumentiert werden, wann die Software bereitgestellt wurde (Timestamp), wie lange sie verwendet wurde (Zeitrahmen/Timeframe) und von wem sie geliefert wurde (Auslieferer/Supplier), ggf. auch für Nutzungsentgelte.

Derzeit werden Daten lediglich zentral auf Datenbanken bei den OEMs gesichert. Es bestehen bedingt Lösungen für die Absicherung von Datenmengen in dezentralen Systemen. Nach dem heutigen Stand der Technik werden bei Softwareupdates (Softwareaktualisierungen) die relevanten Daten auf zentral gelagerten Datenbanken gespeichert. Diese Daten können leicht manipuliert bzw. verändert werden. Für die nichtveränderbare Speicherung ist die DLT eine geeignete Methode. Innerhalb einer DLT wird eine Datenstruktur verwendet, die mittels Verkettung von Daten unter Verwendung von Hashalgorithmen eine nicht Veränderbarkeit sicherstellt. Solche Konzepte werden beispielsweise in den Druckschriften WO 2018/014123 A1, WO2018/053413 A1 und DE 10 2016 007 472 A1 beschrieben.

Das Dokument DE 10 2017 204 538 A1 betrifft ein Verfahren zum Protokollieren von Zustandsdaten eines Fahrzeugs in einer Blockchain. Die Blockchain umfasst in einem Block ein Programmmodul mit Programminstruktionen. Durch Ausführen der Programminstruktionen wird ein dem Programmmodul zugeordneter Eintrag mit Zustandsdaten erzeugt. Das Verfahren umfasst durch ein Fahrzeugcomputersystem: Erstellen eines Datensatzes, wobei der Datensatz die Zustandsdaten des Fahrzeugs umfasst und das dem Fahrzeug zugeordnete Programmmodul identifiziert; Signieren des Datensatzes mit dem privaten kryptographischen Schlüssel; und Senden des signierten Datensatzes über ein Mobilfunknetzwerk an den Blockchain-Server. Das Verfahren umfasst ferner durch den Blockchain-Server: Empfangen des signierten Datensatzes; Ausführen der Programminstruktionen, wobei das Ausführen ein Prüfen der Signatur des Datensatzes und, im Falle einer gültigen Signatur, ein Hinzufügen eines Eintrags mit dem signierten Datensatz und einem Zeitstempel zu einem zusätzlichen Block für die Blockchain.

Das Dokument Carsten Stöcker: "Implementing first Industry 4.0 Use Cases with DAG Tangle - Machine Tagging for Digital Twins", 24. Juni 2017 beschreibt eine kombinierte Verwendung von maschinenbasierter Datenverarbeitung und Blockchains.

Dies bietet eine vertrauenswürdige Grundlage für Prüfungen durch Dritte und Schaffung einer vertrauenswürdigen Umgebung (z.B. Behörden, Überwachungsvereine, Versicherungen, etc.). Heutige Implementierungen, wie public (öffentliche) Blockchains, besitzen niedrige Transaktionsgeschwindigkeiten und sind oft mit hohen Transaktionskosten sowie hohen Energiekosten verbunden. Daher sind sie für die Anzahl an relevanten Transaktionen für Software Updates via OTA nur bedingt geeignet. Zudem sind Micropayments für Machine-to-Machine (M2M) Bezahlungen mit Hilfe von privaten Blockchains nach derzeitigem Stand der Technik nicht tragbar. Dies trifft bei permissioned (erlaubnisbasierten) oder öffentlichen Blockchains in der Regel nicht zu, ist aber mit einer höheren Unsicherheit verbunden. Darüber hinaus steigt die Datenmenge mit wachsender Anzahl an Fahrzeugen und Transaktionen und belastet somit alle am Netzwerk beteiligten Partner.

Bislang werden bei einem Software Update Prozess lediglich Metadaten, wie beispielsweise die Fahrzeugkonfiguration, Softwareversion und Hardwareversion gehashed und über das Fahrzeug mit dem Fahrzeugbackend verifiziert. Bei einem Backend kann es sich beispielsweise um vom Hersteller bereitgestellte Computer/Server mit entsprechenden Daten handeln oder um generell über einen Netzwerkzugang erreichbare Datenbanken. Dabei wird aber nicht die Information über den Softwareinhalt und die Firmware gehashed bzw. gespeichert. Damit könnte eine veränderte Software oder falsche Softwareinhalte übertragen werden. Diese Softwareversion würde trotzdem den gleichen Softwarenamen sowie Versionsnummer tragen und könnte somit nicht als veränderte Software aufgedeckt werden.

Es besteht daher ein Bedarf daran, ein verbessertes Konzept zur Überwachung eines Ausrüstungszustandes eines Fahrzeugs zu schaffen.

Diesem Bedarf werden ein Fahrzeug, eine Netzwerkkomponente, ein Verfahren, ein Computerprogramm und eine Vorrichtung gemäß den anhängigen unabhängigen Ansprüchen gerecht. Vorteilhafte Ausgestaltungen und Weiterbildungen sind Gegenstand der abhängigen Ansprüche.

Ausführungsbeispiele basieren auf der Erkenntnis, dass für eine sichere und eindeutige Nachweisbarkeit von Softwarecontent (Inhalten), diese bei einem Hashing-Algorithmus mit berücksichtigt werden können. Darüber hinaus kann neben dem Hashing von Softwareinhalten und -versionen (Firmware) sowie externer Parameter bei Softwareupdates, die via Over-the - Air-(OTA, über die Luft i.S.v. schnurlos) Technologie in Fahrzeuge übertragen werden, eine DLT basierend auf einer ein- oder mehrdimensionalen DAG Struktur eingesetzt werden, die dann die Softwareinhalte mit berücksichtigt. Es kann somit ein Überprüfungsmechanismus für die Ausrüstungszustände von Fahrzeugen geschaffen werden, der auch Dritten eine zuverlässige Überprüfung erlaubt.

Ausführungsbeispiele schaffen ein Verfahren zum Generieren einer Kennung für einen Ausrüstungszustand eines Fahrzeugs. Das Verfahren umfasst ein Bestimmen einer ersten Information über ein oder mehrere vorhandene Softwarekomponenten und deren Softwareversionen, und ein Bestimmen einer zweiten Information über ein oder mehrere vorhandene Hardwarekomponenten und deren Hardwareversionen. Das Verfahren umfasst darüber hinaus ein Generieren eines Hashwertes basierend auf der ersten Information, der zweiten Information und einem Softwareinhalt der einen oder mehrerer Softwarekomponenten sowie ein Bereitstellen des Hashwertes als Kennung für den Ausrüstungszustand (bzgl. Hardware und Software) des Fahrzeuges. Ausführungsbeispiele können durch die Berücksichtigung des Softwareinhalts bei der Bestimmung des Hashwertes auch Veränderungen im Softwareinhalt erkennbar machen. Der Ausrüstzustand des Fahrzeugs kann somit auch anhand des konkreten Softwareinhalts einer bestimmten Softwareversion verifiziert werden. Durch zusätzliches Verwenden der Hardwareinformation, e.g. Kennungen der Steuergeräte, kann auch die Hardware verifiziert werden und damit auch ein Austausch der Hardware bei gleicher Software erkannt werden.

In einigen weiteren Ausführungsbeispielen kann das Verfahren ferner ein Speichern des Hashwertes in einer dezentralen Datenbank umfassen. Solche Ausführungsbeispiele können so ein höheres Maß an Sicherheit und Zuverlässigkeit bei der Verifikation von Software und Hardware eines Fahrzeugs schaffen. In weiteren Ausführungsbeispielen kann die dezentrale Datenbank mit einer DLT kombiniert werden, insbesondere einer Blockchain oder einer Technologie, die einem mehrdimensionalen gerichteten Graphen folgt (z.B. Tangle). Beispielsweise kann hier DLT eingesetzt werden, um mehrere Netzwerkkomponenten an dem Hashing und Speichern des Hashwertes zu beteiligen und so zu verhindern, dass einzelne oder eine Gruppe einzelner Netzwerkkomponenten Softwareinhalte unerkannt manipulieren könnten. Dabei können mehrere Informationen, die als Hash zur Verfügung stehen, so kombiniert werden, dass die einzelnen Komponenten trotzdem unterscheidbar bleiben.

Das Speichern kann in einigen weiteren Ausführungsbeispielen in einem mehrdimensionalen Graphen durchgeführt werden. Solche Ausführungsbeispiele basieren auf dem Kerngedanken, dass neben sequentiellen Blockchains auch DAG basierte Strukturen existieren, die mit steigender Anzahl von Transaktionen hingegen das Netzwerk schneller und sicherer machen, da Transaktionen parallel verarbeitet werden können. Der Ansatz sieht in solchen Ausführungsbeispielen vor, dass der Sender zunächst immer mehrere vorherige Transaktionen verifiziert, was die Grundlage für die Skalierbarkeit der Struktur darstellt. Auch ist diese Struktur ohne Netzanbindung mit der DLT nutzbar, wodurch der Software-Update-Prozess offline durchführbar und auch nachweisbar wird.

In manchen Ausführungsbeispielen kann das Generieren des Hashwertes ferner auf einem oder mehreren Elementen der Gruppe von einer Fahrzeugkonfiguration, einem Zeitpunkt der Generierung, einem Fahrzeugparameter, einer maximalen Höchstgeschwindigkeit, einer Aktivierung einer adaptiven Abstandskontrolle, und einer Aktivierung eines fahrzeugbezogenen Dienstes basieren. Ausführungsbeispiele können so die Einbindung von weiteren Parametern erlauben, die dann ebenfalls verifizierbar werden. Dabei können beispielsweise externe Parameter eingebunden, gehashed und gespeichert werden sowie mit dem Backend des Fahrzeuges abgeglichen werden.

Das Speichern kann zumindest in einigen Ausführungsbeispielen eindeutig sein und Änderungen an den gespeicherten Daten können über eine Verifikation des Hashwertes detektierbar sein. Damit ist es möglich anhand tatsächlich vorhandener Fahrzeugdaten einen Hashwert zu generieren, und diesen mit einem verteilt gespeicherten (sicheren/vertrauenswürdigen) Hashwert zu vergleichen.

Das Speichern kann ein Verteilen identischer Kopien der Kennung in einem Netzwerk mit mehreren Teilnehmern umfassen. So kann in zumindest manchen Ausführungsbeispielen eine verteilte Speicherung erreicht werden.

Das Verfahren kann ein Verifizieren eines Ausrüstungszustands des Fahrzeugs durch Verifizieren der generierten Kennung mit einer von dem Fahrzeug bereitgestellten Kennung umfassen, beispielsweise auch in Verbindung mit einer Fahrzeugidentifikation (VIN, Vehicle Identification Number) . Dabei kann es Dritten ermöglicht werden zuverlässig den Ausrüstzustand (zumindest Softwareversion, Hardwareversion und Softwareinhalt) zu überprüfen. Beispielsweise kann das Verifizieren des Ausrüstungszustands bei jedem Start des Fahrzeugs durchgeführt werden.

Ein weiteres Ausführungsbeispiel ist ein Computerprogramm zur Durchführung eines der hierin beschriebenen Verfahren, wenn das Computerprogramm auf einem Computer, einem Prozessor, oder einer programmierbaren Hardwarekomponente abläuft. Eine Vorrichtung mit einem Kontrollmodul, das ausgebildet ist, um eines der hierin beschriebenen Verfahren auszuführen ist ein weiteres Ausführungsbeispiel. Ausführungsbeispiele schaffen darüber hinaus ein Fahrzeug und eine Netzwerkkomponente, die eine entsprechende Vorrichtung umfassen, sowie ein System mit einem Fahrzeug und einer Netzwerkkomponente gemäß der vorliegenden Beschreibung.

Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen:
Fig. 1 ein Flussdiagramm eines Ausführungsbeispiels eines Verfahrens zum Generieren einer Kennung für einen Ausrüstungszustand eines Fahrzeugs;
Fig. 2 ein Ablaufdiagramm eines Verifikationsverfahrens in einem Ausführungsbeispiel;
Fig. 3 eine Übersicht zu den Veränderungen von Hashing-Eigenschaften in Ausführungsbeispielen;
Fig. 4 eine Implementierung eines Ausführungsbeispiels eines Verfahrens zum Generieren einer Kennung für einen Ausrüstungszustand eines Fahrzeugs; und
Fig. 5 verschiedene Dokumentationsszenarien in Ausführungsbeispielen.

Verschiedene Ausführungsbeispiele werden nun ausführlicher unter Bezugnahme auf die beiliegenden Zeichnungen beschrieben, in denen einige Ausführungsbeispiele dargestellt sind. Optionale Merkmale oder Komponenten sind dabei in gestrichelten Linien dargestellt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer", "eine", "eines" und "der", "die", "das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Ein Speichern von Software-Update-Daten ausschließlich auf zentralen Datenbanken ermöglicht generell eine Veränderung der Daten durch die kontrollierende Instanz. Darüber hinaus kann bei der Speicherung von Software-Updates mit Übertragung lediglich von (gehashten) Metadaten, beispielsweise die Softwareversion, nur bedingt Sicherheit erzielt werden, da sich Veränderungen im Inhalt der Software nicht im Hashwert widerspiegeln. Damit kann nicht eineindeutig erkannt werden, ob es sich um den rechtmäßigen Softwareinhalt handelt.

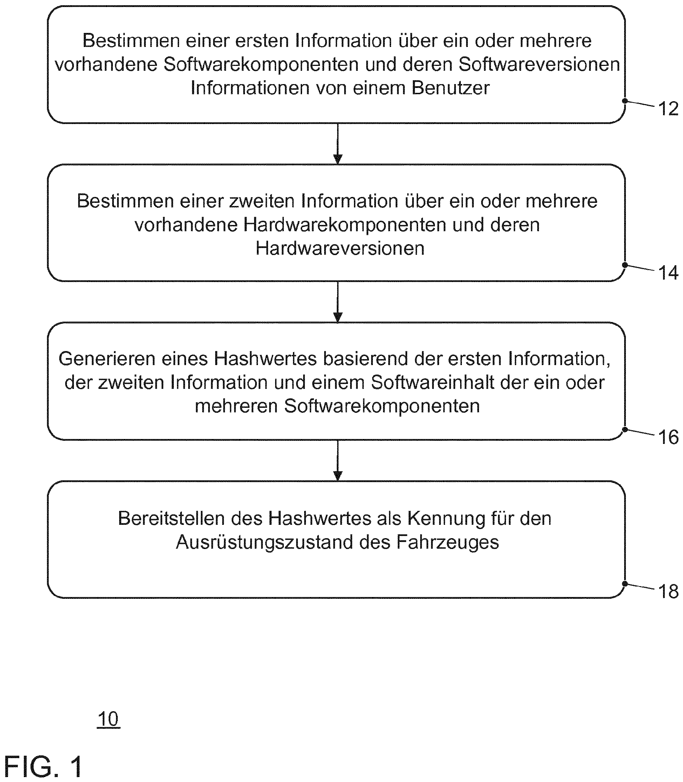

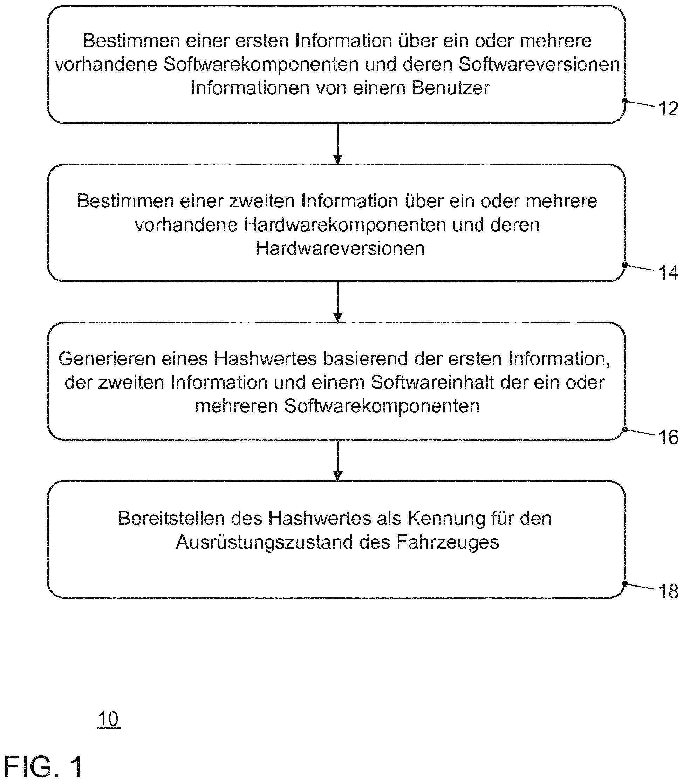

Fig. 1 zeigt ein Flussdiagramm eines Ausführungsbeispiels eines Verfahrens 10 zum Generieren einer Kennung für einen Ausrüstungszustand eines Fahrzeugs. Das Verfahren 10 umfasst ein Bestimmen 12 einer ersten Information über ein oder mehrere vorhandene Softwarekomponenten und deren Softwareversionen, und ein Bestimmen 14 einer zweiten Information über ein oder mehrere vorhandene Hardwarekomponenten und deren Hardwareversionen. Das Verfahren 10 umfasst darüber hinaus ein Generieren 16 eines Hashwertes basierend auf der ersten Information, der zweiten Information und einem Softwareinhalt der ein oder mehreren Softwarekomponenten, sowie ein Bereitstellen 18 des Hashwertes als Kennung für den Ausrüstungszustand des Fahrzeuges.

Als Fahrzeuge kommen in Ausführungsbeispielen alle denkbaren Fahrzeuge (Straßen-, Wasser, oder Luftfahrzeuge incl. Drohnen, usw.) in Betracht, die Gebrauch von Software machen. Beispiele sind Personenkraftwagen, Lastkraftwagen, Zweiräder, Züge, Flugzeuge, Schiffe, etc. Dafür kommen neben Fortbewegungsmitteln auch Drohnen in Betracht, insbesondere solche die gewerblich eingesetzt werden (Warenlieferungen), aber auch generell alle mobilen Geräte, bei denen ein Interesse an einer Überwachung des Ausrüstungszustands besteht.

Beim Generieren des Hashwertes kann dabei auf eine Hashfunktion (Streuwertfunktion) zurückgegriffen werden, die eine erste größere Datenmenge auf eine zweite kleinere Datenmenge abbildet. Wie der Name schon andeutet, werden aus den Eingabewerten durch Streuung oder durch Zerhacken Ausgabewerte gebildet. Dabei sollen Veränderungen in den Eingabewerten möglichst auch zu Veränderungen in den Ausgabewerten führen. Die Hashfunktion liefert einen solchen Hashing-Algorithmus, wobei diese mit verschiedenen Eigenschaften bereits verfügbar sind. Der Hashwert, der die Ausgabe des Hashing-Algorithmus darstellt, bildet daher eine Art Signatur, Prüfnummer oder einen Fingerabdruck der Eingangsdaten, um deren Authentizität überprüfbar zu machen. Es ist eine Eigenart der Hashingtechnologie, dass unterschiedliche Inputs nicht zu identischen Hashes führen. Eine Rückrechnung vom Hashwert auf die Inhalte (mit vertretbarem Aufwand) kann ebenfalls ausgeschlossen werden. Generell sind verschiedene Hashingfunktionen in Ausführungsbeispielen denkbar.

Bei den in Ausführungsbeispielen verwendeten Eingangswerten (Informationen über Softwareversionen und Hardwareversionen sowie Softwareinhalt) kann es sich um die tatsächlichen Ursprungsinformation (Quelldaten) handeln oder auch um nach einem bestimmten Schlüssel oder Algorithmus ausgewählte Teildatenmengen. Ausführungsbeispiele schaffen so eine Überprüfbarkeit auch der Softwareinhalte, da veränderte Inhalt zu veränderten Kennungen oder Hashwerten führen.

Ausführungsbeispiele schaffen auch eine Vorrichtung mit einem Kontrollmodul, das zur Durchführung eines der hierin beschriebenen Verfahren ausgebildet ist. Beispielsweise kann ein solches Verfahren in Software implementiert sein und kann dann durch entsprechende Hardware ausgeführt werden. Ein solches Kontrollmodul kann in Ausführungsbeispielen beispielsweise einem oder mehreren beliebigen Controllern oder Prozessoren oder einer programmierbaren Hardwarekomponente entsprechen. Beispielsweise kann eine Vorrichtung auch als Software realisiert sein, die für eine entsprechende Hardwarekomponente programmiert ist. Insofern kann ein Kontrollmodul als programmierbare Hardware mit entsprechend angepasster Software implementiert sein. Dabei können beliebige Prozessoren, wie Digitale Signal Prozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren oder Mikrokontroller zur Implementierung der Vorrichtung oder des Kontrollmoduls denkbar. Es sind auch Implementierungen in integrierter Form mit anderen Kontrolleinheiten denkbar, beispielsweise in einer Kontrolleinheit für ein Fahrzeug, eine ECU, ein Benutzer-Endgerät, ein Server, die zusätzlich noch ein oder mehrere andere Funktionen umfassen können.

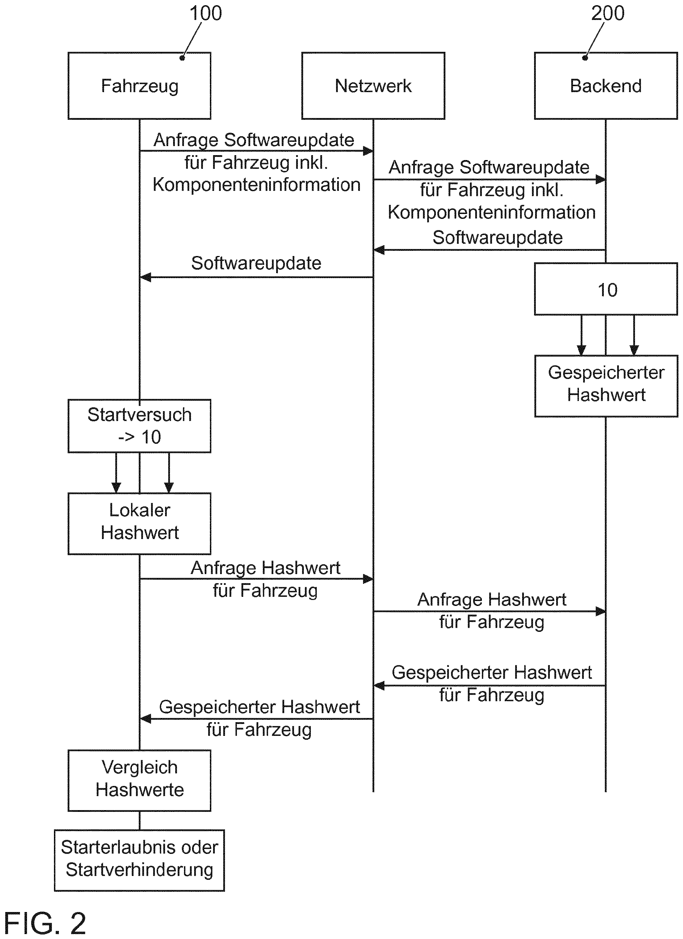

Entsprechend bilden Fahrzeuge und Netzwerkkomponenten mit solchen Vorrichtungen weitere Ausführungsbeispiele. Fig. 2 zeigt ein Ablaufdiagramm eines Verfahrens anhand einer Nachrichtensequenz in einem Ausführungsbeispiel. Die Fig. 2 zeigt auf der linken Seite ein Ausführungsbeispiel eines Fahrzeugs 100 mit einer solchen Vorrichtung, das über das Internet mit einem Backend gekoppelt ist. Dieses Backend umfasst Ausführungsbeispiele von Netzwerkkomponenten 200, die ebenfalls solche Vorrichtungen umfassen. Insofern zeigt die Fig. 2 auch ein Ausführungsbeispiel eines Systems mit ein oder mehreren Fahrzeugen und ein oder mehreren Netzwerkkomponenten 200.

Die Fig. 2 illustriert dabei zunächst einen Softwareaktualisierungsprozess (Softwareupdate) in dem Fahrzeug 100. Dazu fragt das Fahrzeug 100 nach einem Softwareupdate über ein Netzwerk beim Backend 200 an. Alternativ kann ein Update auch vom Backend 200 angeboten werden, sodass dann die Initiative von zumindest einer Netzwerkkomponente 200 ausginge. Das Netzwerk kann ein beliebiges Netzwerk sein, z.B. das Internet. Die Anbindung des Fahrzeugs 100 an dieses Netzwerk kann über entsprechende Kommunikationsschnittstellen (z.B. OCU von engl. "Online Communication Unit") erfolgen, Beispiele sind ein Modem für zellularen Mobilfunk oder für WLAN (Wireless Local Area Network) o.ä.

In dem in der Fig. 2 gezeigten Beispiel, wird die Anfrage von der Netzwerkkomponente 200 mit entsprechendem Softwareupdate beantwortet. Die Netzwerkkomponente kann nun das in der Fig.1 beschriebene Verfahren durchführen und einen Hashwert speichern. Die dazu notwendigen Informationen über die Hardware und die Hardwareversionen aus dem Fahrzeug 100 werden hier im Rahmen der Komponenteninformation bei der Anfrage mit übertragen. Zur Speicherung wird hier das Backend verwendet. Wie im Folgenden noch näher erläutert wird, kann dies in verteilter und geschützter Art und Weise geschehen, z.B. in ein- oder mehrdimensionaler DLT, insbesondere mit einer Blockchain oder einer einem mehrdimensionalen gerichteten Graphen folgenden Technologie.

Die Fig. 2 zeigt darüber hinaus ein Verifizieren eines Ausrüstungszustands des Fahrzeugs 100 durch Verifizieren der von der Netzwerkkomponente 200 generierten Kennung (Hashwert) mit einer von dem Fahrzeug 100 bereitgestellten Kennung. Dabei wird im Fahrzeug 100 lokal z.B. bei jedem Startversuch das Verfahren 10 ausgeführt und ein Hashwert/eine Kennung berechnet. Nun kann prinzipiell dieser Wert mit dem gespeicherten Hashwert aus dem Backend zur Verifikation des Ausrüstungszustandes des Fahrzeugs 100 verglichen werden. Dabei kann beispielsweise der entsprechende Hashwert in einer Blockchain oder in einem mehrdimensionalen gerichteten Graphen gesucht werden. Das Verifizieren des Ausrüstungszustands kann z.B. bei jedem Start des Fahrzeugs durchgeführt werden. Denkbar sind zwei Möglichkeiten, nämlich die Durchführung des Vergleichs im Fahrzeug oder auf der Netzwerkseite. Fig. 2 zeigt den Vergleich auf der Fahrzeugseite. Dazu fragt das Fahrzeug beim Startversuch über das Netzwerk beim Backend den gespeicherten Hashwert an und erhält diesen vom Backend zurück. Sofern die beiden Hashwerte übereinstimmen, kann die Starterlaubnis erteilt werden. Stimmen die Werte nicht überein, so sind verschiedene Maßnahmen denkbar. Fig. 2 zeigt für diesen Fall eine Startverhinderung, andere Möglichkeiten sind eine Warn- oder Fehlermeldung (falsche Software/Hardware), eine Aufforderung zum Softwareupdate, das Erlauben einer gewissen Anzahl von Starts bis zur Startverhinderung sofern die Verifikation nicht erfolgreich ist, usw. Alternativ kann der Vergleich auch auf der Netzwerkseite durchgeführt werden. Dazu überträgt das Fahrzeug 100 den lokal generierten Hashwert an eine kontrollierende Netzwerkkomponente 200, die den Vergleich durchführt und je nach Ergebnis entsprechende Maßnahmen ergreift. Im Falle von Netzwerkstörungen, mangelnder Abdeckung oder anderen Kommunikationsproblemen, können beispielsweise auch eine Anzahl von Starts ohne Verifikation erlaubt werden.

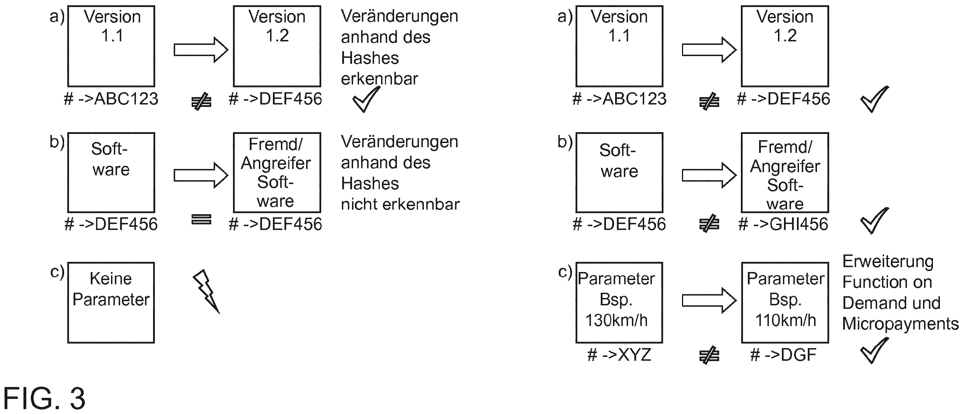

Fig. 3 zeigt eine Übersicht zu den Veränderungen von Hashing-Eigenschaften in Ausführungsbeispielen. Die linke Seite der Fig. 3 zeigt dabei die herkömmlichen Eigenschaften und die rechte Seite zeigt die Möglichkeiten in Ausführungsbeispielen. Dabei wird jeweils von einem Fahrzeugszenario ausgegangen, wobei das Fahrzeug eine Online Connectivity Unit (OCU, ein Funkmodem zur Verbindung mit einem Netzwerk, z.B. Mobilfunk, Internet, usw.) aufweist. In der ersten Zeile wird ein Beispiel a) dargestellt bei dem schon heute Software (z.B. Konfigurationsdaten in xml, "extended markup language") mit verschiedenen Versionsnummern verschiedene Hashwerte erzeugt und daher die Versionsnummern verifizierbar sind. In der zweiten Zeile im Beispiel b) wird klar, dass veränderte Softwareinhalte bei gleicher Versionsnummer herkömmlich auch zum gleichen Hashwert führen. Daher sind Veränderungen am Softwareinhalt anhand des Hashes herkömmlich nicht erkennbar. Dies ändert sich in Ausführungsbeispielen durch Berücksichtigung des Softwareinhalts bei der Hashwerterzeugung und ist in der Fig. 3 b) rechts gezeigt, wo andere Softwareinhalte (oder auch veränderte Firmware-Inhalte) andere Hashwerte erzeugen. Schließlich zeigt die Fig. 3 unten, dass herkömmlich keine Parameter mit in die Erzeugung des Hashwertes eingeflossen sind, die von Ausführungsbeispielen jedoch berücksichtigt werden können. Dies ist in der Fig. 3 unten rechts gezeigt, wo beispielsweise eine gesetzte maximale Höchstgeschwindigkeit von 130 Km/h mit in den Hashwert einbezogen wird und damit verifizierbar wird. Eine Veränderung der maximal gesetzten Höchstgeschwindigkeit würde damit auch zu einem veränderten Hashwert führen. Ausführungsbeispiele können darüber hinaus eine Erweiterung auf weitere Dienste umfassen, Beispiele sind "Function on Demand" (Funktionserweiterung bei Bedarf) und Micropayments (Zahlungen, beispielsweise Kleinzahlungen zwischen Maschinen).

Ausführungsbeispiele können darüber hinaus ein Speichern des Hashwertes in einer dezentralen Datenbank durchführen. Der Begriff dezentrale Datenbank meint dabei, dass im Gegensatz zu einer zentralen Speicherung unter Kontrolle einer einzelnen Netzwerkkomponente, dezentral unter der Kontrolle mehrerer Netzwerkkomponenten und auf mehreren Netzwerkkomponenten gespeichert wird. Dies erhöht die Sicherheit der Daten (Redundanz) und kann, wie im Folgenden noch näher erläutert wird, auch dazu verwendet werden, die Zuverlässigkeit und den Schutz gegen Manipulationen erhöhen. Die dezentrale Datenbank kann beispielsweise einer Datenbank gemäß einer DLT, insbesondere einer Blockchain oder einer einem mehrdimensionalen gerichteten Graphen folgenden Technologie, entsprechen. Dabei wird ein Netzwerk mit mehreren Netzwerkkomponenten oder Computern verwendet, die sich über eine Reihenfolgen von Transaktionen einigen und mit diesen Transaktionen Daten aktualisieren. Diese Daten werden dann verteilt auf den beteiligten Netzwerkkomponenten gespeichert. Dadurch, dass die Komponenten sich zuvor auf Transaktionen und die dadurch manipulierten Daten einigen, können spätere Manipulationen, die an den Daten oder Transaktionen vorgenommen werden, erkannt werden.

Als weitere Maßnahme kann in weiteren Ausführungsbeispielen das Speichern in einem mehrdimensionalen Graphen durchgeführt wird. In manchen Ausführungsbeispielen bilden die Computer oder Netzwerkkomponenten einen Grafen, der gerichtet sein kann. Zwischen den einzelnen Netzwerkkomponenten werden demnach Verbindungen ausgebildet, die prinzipiell gerichtet oder ungerichtet sein können. Dabei kann es sich um eine Sequenz handeln, d.h. entlang des Graphen und seinen gerichteten Kanten (Verbindungen) hat jeder Vorgänger genau einen Nachfolger. Dies wäre beispielsweise in einer Blockchain (Sequenz von Blöcken) der Fall und dabei wird von einer Dimension gesprochen. Dabei kann dann die Kette von Blöcken auf mehreren Netzwerkkomponenten gespeichert werden, so dass auch der Hashwert entsprechend auf die mehreren Komponenten verteilt/kopiert wird. Dieser wird dabei nicht nur gespeichert, sondern auch verifizierbar/nachvollziehbar, da die zur Verifikation notwendige Kette ebenfalls verteilt verfügbar ist. Manipulationen an der Kette oder den Daten können damit über den daraus resultierenden veränderten Hashwert erkannt werden. Insofern kann das Speichern ein Verteilen identischer Kopien der Kennung in einem Netzwerk mit mehreren Teilnehmern umfassen. Im mehrdimensionalen Fall werden parallele Strukturen ausgebildet, sodass es aus der Sicht einer beteiligten Netzwerkkomponente neben Vorgängern und Nachfolgern auch Nachbarn gibt, mit denen ebenfalls Einigungen über Transaktionen erzielt werden, bzw. deren Transaktionen auch überprüfbar sind. In dieser auch parallelen Struktur können entsprechend parallele Prozesse ablaufen, die die Bearbeitungsgeschwindigkeit und Rechenkapazität erhöhen.

In Anlehnung an Fig. 2 kann das Fahrzeug beispielsweise vom Backend die Information erhalten, dass ein neues Software Update bei Fahrzeugstart (bei Klemme 15 an) verfügbar ist. Diese Information wird über die Konnektivität (Netzwerk in Fig. 2) zwischen Fahrzeug 100 und Backend 200 bereitgestellt. Ausführungsbeispiele beziehen zusätzliche Informationen zu den Informationen über die Softwareversionen, Hardwareversion, Fahrzeugkonfiguration und dem Zeitpunkt beim Hashing und Abgleich mit ein. Zusätzlich zu diesen Metadaten sehen Ausführungsbeispiele vor, auch den gesamten Softwarecontent zu hashen (verschlüsseln), damit sichergestellt wird, dass auch die richtige Software auf die Fahrzeuge übertragen wird.

Damit ist gewährleistet, dass der Fahrzeugzustand (Ausrüstungszustand zumindest hinsichtlich Hard- und Software) exakt beschrieben ist und auch nachweisbar dokumentiert ist.

Der Status des Software-Update-Prozesses, der Fahrzeugzustand (Softwareinhalt (Content), Softwareversion, Hardwareversion) und die Konfiguration wird beispielsweise in der DLT 200 gespeichert und kann somit nicht manipuliert oder verändert werden.

Das DLT-Verfahren erlaubt es, dass die Speicherung der Daten auf dem mehrdimensionalen erzeugten Graphen nicht mehr nachträglich verändert werden kann und ein historisches Fahrzeugarchiv abgelegt wird. In anderen Worten gibt es einen oder mehrere digitale Zwillinge ("Digital Twin"). Der Aufbau stellt in gewisser Weise eine offene Datenbank dar, in der sämtliche Transaktionen des Netzwerkes gespeichert werden. Des Weiteren werden die Datenmengen in gehashter Form auf dem DLT abgelegt, um von einer prüfenden Partei verifiziert werden zu können, ohne dass Daten im Klartext offen gelegt werden müssen. Die Validierung der Transaktionen (Software-Update-Prozess) kann parallel ablaufen, so dass ein hoher Transaktionsdurchsatz erzeugt wird, der aber mit keinerlei Transaktionskosten verbunden ist.

In einem weiteren Ausführungsbeispiel umfasst das Verfahren ein Generieren des Hashwertes ferner basierend auf einem oder mehreren Elementen der Gruppe von einer Fahrzeugkonfiguration, einem Zeitpunkt der Generierung, einem Fahrzeugparameter, einer maximalen Höchstgeschwindigkeit, einer Aktivierung einer adaptiven Abstandskontrolle, und einer Aktivierung eines fahrzeugbezogenen Dienstes. In anderen Worten können zumindest manche Ausführungsbeispiele weitere Informationen in den Kreis der nachhaltig überprüfbaren und sicher gespeicherten Informationen mit aufnehmen. Dabei sind insbesondere solche Informationen interessant, die mit den Rechten der Fahrzeugnutzer/-betreiber zusammenhängen, beispielsweise ob diese berechtigt sind bestimmte Funktionen zu nutzen (Ausstattungsvariante des Fahrzeugs) oder das Fahrzeug in gewissen Modi zu betreiben (z.B. Begrenzung der Höchstgeschwindigkeit). Ausführungsbeispiele können vorsehen, auch externe Parameterdaten einzubinden und zu hashen. Bei Software-Updates oder "Function on Demand" (FoD) werden zusätzliche Datensätze gebraucht, wie beispielsweise der Nachweis der Geschwindigkeit. So könnten beispielsweise Fahranfänger mit einer begrenzten Höchstgeschwindigkeit ausgewiesen werden. Ein weiteres Beispiel ist die Freischaltung der ACC (Adaptive Cruise Control, adaptive Geschwindigkeitsregelung) Funktion sowie Funktionen rund um fahrzeugbezogene Dienste (Services).

Gegenüber einer reinen Zugriffsverwaltung auf eine zentrale Datenbank, um die Integrität der Daten zu bewahren, ermöglichen Ausführungsbeispiele zusätzliche Funktionen. Zumindest einige Ausführungsbeispiele schaffen Anwendungen für DLT in diesem Bereich für Software-Update Speicherungen auf einem dezentralen System. Die Nutzung eines DLT Verfahrens mit einem mehrdimensionalen entstehenden Graphen zur nichtveränderbaren und sicheren Speicherung des gesamten Softwarecontent und -version in gehashter Form inklusive weiterer Metainformationen eines jeden Fahrzeuges zu beliebigen Zeitpunkten (Zeitstempel/Timestamp) kann eine verbesserte Überprüfbarkeit der Fahrzeugsoftware auch durch Dritte ermöglichen. Das Speichern kann in Ausführungsbeispielen eindeutig sein und Änderungen an den gespeicherten Daten können über eine Verifikation des Hashwertes detektierbar sein.

Ausführungsbeispiele eignen sich als Ermöglichungstechnik (Enabler-Technologie) für eine sichere Nachweisbarkeit eines Fahrzeugzustandes und der verwendeten Software Parameter.

Gemäß Ausführungsbeispielen kann eine Lösung in der eindeutigen und nicht veränderbaren Speicherung von Daten (Software Content, externen Parametern und Softwareversionen) und Metadaten in einer DLT mit einem mehrdimensional gerichteten Graphen bestehen. Die Daten sind in der DLT gespeichert und öffentlich auditierbar, da jeder Teilnehmer im Netzwerk eine identische Kopie hat.

Im Vergleich zu anderen Technologien wird bei manchen Ausführungsbeispielen eben gerade keine lineare Kette im herkömmlichen Sinn einer Blockchain eingesetzt, da ein solches System zu langsam und energieaufwendig ist und auf große Rechenleistungen (Mining etc.) zurückgreifen würde. Bei diesem mehrdimensionalen Ansatz werden immer mehrere Transaktionen gleichzeitig verarbeitet und authentifiziert (in quasi Echtzeit überprüft), wodurch die Struktur der Mehrdimensionalität entsteht.

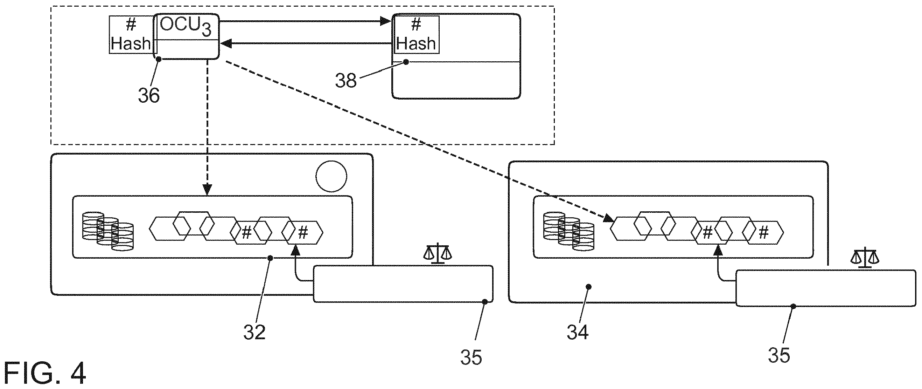

Fig. 4 illustriert eine Implementierung eines Ausführungsbeispiels eines Verfahrens 10 zum Generieren einer Kennung für einen Ausrüstungszustand eines Fahrzeugs. Dabei wird von zwei Netzwerkvarianten ausgegangen. Eine erste Netzwerkvariante ist mit 32 bezeichnet, das als Sicherheitssystem (beispielsweise als Kryptozahlsystem) fungiert und über einen mehrdimensionalen gerichteten Graphen (z.B. Tangle) implementiert ist. Hierbei handelt es sich um eine zuverlässige und vertrauenswürdige Datenquelle (auch "trusted Source of Data"). Eine zweite Netzwerkvariante ist als 34 bezeichnet und verwendet eine Blockchain. Auch bei dieser Netzwerkvariante 34 handelt es sich um eine zuverlässige und vertrauenswürdige Datenquelle. Beispielsweise hat eine Behörde 35 Zugriff auf beide Netzwerkvarianten und kann die jeweiligen Transaktionen in beiden Varianten überprüfen. Die OCU 36 im Fahrzeug (kann auch als Client bezeichnet werden) verfügt über einen Software Code (z.B. für Tangle) zur Kommunikation mit der ersten Netzwerkvariante 32 und einen entsprechenden Software Code (z.B. Blockchain) zur Kommunikation mit der zweiten Netzwerkvariante 34. Entsprechende Software/Parameter Aktualisierungen (Updates) werden mit einem Backend des Fahrzeugherstellers 38 ausgetauscht. Ein solches Backend kann als modularer Backend Baukasten (MBB) aufgebaut sein. Die Verbindung (auch "connectivity") zwischen dem Fahrzeug/OCU 36 und dem Backend 38 kann über entsprechend ausgelegte Schnittstellen im Fahrzeug 36 und im Backend 38 bewerkstelligt werden. Insgesamt entsteht so eine vertrauenswürdige Netzwerkumgebung ("trusted Environment"). In dem betrachteten Ausführungsbeispiel wird der gesamte Softwareinhalt gehasht. Ein im Fahrzeug generierter Hashwert wird mit einem vom Backend erzeugten Hashwert zusammengeführt und das Resultat wird sowohl in der ersten Netzwerkvariante 32 als auch in der zweiten Netzwerkvariante 34 gespeichert.

Einige Ansätze nutzen vordergründig eine Blockchain zur Absicherung. Aus den erwähnten Nachteilen eignet sich diese Technologie nur bedingt für den Anwendungsfall. Daher wird in einigen Ausführungsbeispielen auf die DLT mit DAG zurückgegriffen. Eine weitere Anwendung der Technologie, ist die Einbindung von Machine-to-Machine (M2M, Maschine-zu Maschine) Bezahlungen. Damit kann sicher dokumentiert werden, wann das Fahrzeug eine Fahrzeuganwendung durchgeführt hat, vgl. Sicherheitssysteme wie beispielsweise mehrdimensionale gerichtete Graphen, Kryptobezahlsysteme oder IOTA.

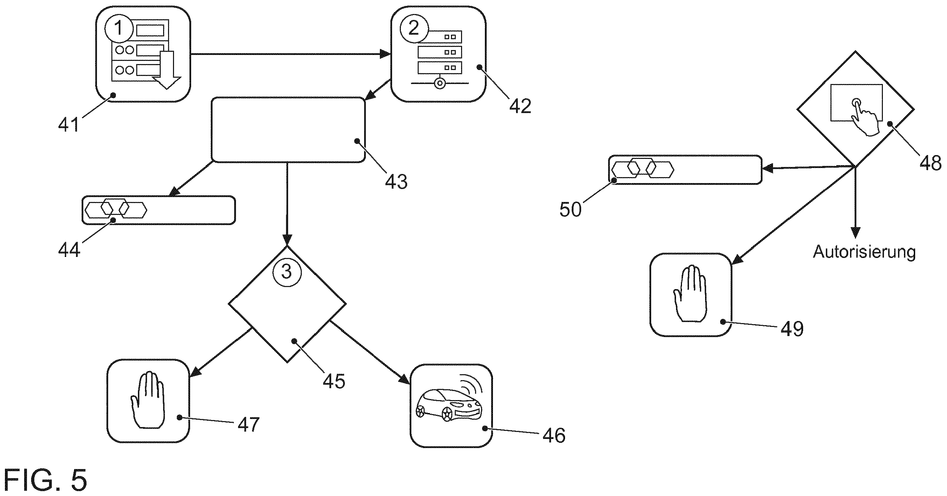

Fig. 5 illustriert verschiedene Dokumentationsszenarien für Fahrzeugkonfigurationen in Ausführungsbeispielen. In diesem Ausführungsbeispiel wird von Szenarien der Dokumentation in den beiden Netzwerkvarianten 32, 34 aus der Fig. 4 ausgegangen. Fig. 5 zeigt zunächst links die Fahrzeugseite/Fahrzeugkonfiguration mit einer OCU 41, die einen Aktualisierungsauftrag (Updatejob) an ein Backend 42 (z.B. Herstellerserver) sendet und damit eine Aktualisierung anfordert. Das Backend 42 hält dabei Updates bereit, dies ist im vorliegenden Ausführungsbeispiel immer der Fall, auch wenn kein aktuelles Update vorliegt (es wird zumindest das letzte Update angeboten). Damit kann das Backend ggf. eine Aktualisierung bereitstellen. Im Falle eines Updates folgt dann der Aufruf 43 der Netzwerkvarianten (z.B. Blockchain bzw. des Tangle) über die entsprechenden Codes durch die OCU 41 und die Anforderung des Updates wird dokumentiert 44. Sofern ein neueres Update vorhanden ist 45 (z.B. Online Remote Update, Fernaktualisierung) beginnt dann der Downloadprozess 46 in das Fahrzeug. Falls kein neueres Update vorhanden ist 45, wird der Update-Prozess abgebrochen 47. Darüber hinaus zeigt die Fig. 5 auf der linken Seite den Prozess aus der Sicht des Nutzers (beispielsweise Fahrzeugführer) für den Fall einer durch das Backend abgelehnten Aktualisierung. Der Nutzer kann z.B. über eine Schnittstelle (Human Machine Interface HMI, Mensch-Maschine-Schnittstelle, beispielsweise eine berührungsempfindliche Anzeige oder entsprechende Bedienelemente) eine Aktualisierungsabfrage starten 48 und muss sich ggf. über eine Kennung autorisieren (S-PIN, Secure Personal Identification Number, sichere persönliche Identifizierungsnummer). Sofern kein aktuelleres Update vorhanden ist, wird der Prozess abgebrochen 49. Ansonsten werden die Daten als Hash in zumindest einer der Netzwerkvarianten (beispielsweise in der Blockchain oder dem Tangle) abgelegt 50. Auch kann die Update-Anfrage selbst dokumentiert werden unabhängig davon, ob ein Update tatsächlich durchgeführt wurde. Beispielsweise können Update-Ablehnungen durch Fahrzeugnutzer so dokumentiert werden.

Spezielle Entwicklungen für loT (Internet of Things) Applikationen/Anwendungen bei Transaktionen via OTA oder auch Transaktionen von (Vehilcle-to-Vehicle, Fahrzeug-zu Fahrzeug Kommunikation) können in Ausführungsbeispiele zum Einsatz kommen. Andere Anwendungsgebiete von Ausführungsbeispielen sind jegliche OTA-Anwendungen, FoD, Nachladen von Funktionen, Remote Repair, Remote Production (Fernreparatur, Fernproduktion). In zumindest manchen Ausführungsbeispielen werden Transaktionen mehrdimensional abgespeichert. Dabei entstehen keine Transaktionskosten und es resultiert eine hohe Skalierbarkeit. Durch die Mehrdimensionalität können zumindest einige Ausführungsbeispiele eine geringe Dauer bei der Verifizierung realisieren. Darüber hinaus können Ausführungsbeispiele eine Manipulierbarkeit nahezu ausschließen und eine hohe Vertrauenswürdigkeit der Daten erzeugen. Ausführungsbeispiele können ferner eine Möglichkeit von Micropayments schaffen, also die automatisierte Zahlung von Kleinstbeträgen zwischen Maschinen.

Weitere Ausführungsbeispiele sind Computerprogramme zur Durchführung eines der hierin beschriebenen Verfahren, wenn das Computerprogramm auf einem Computer, einem Prozessor, oder einer programmierbaren Hardwarekomponente abläuft. Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 10: Verfahren zum Generieren einer Kennung für einen Ausrüstungszustand eines Fahrzeugs
- 12: Bestimmen einer ersten Information über ein oder mehrere vorhandene Softwarekomponenten und deren Softwareversionen
- 14: Bestimmen einer zweiten Information über ein oder mehrere vorhandene Hardwarekomponenten und deren Hardwareversionen
- 16: Generieren eines Hashwertes basierend auf der ersten Information, der zweiten Information und einem Softwareinhalt der ein oder mehreren Softwarekomponenten
- 18: Bereitstellen des Hashwertes als Kennung für den Ausrüstungszustand des Fahrzeuges.
- 32: Sicherheitssystem
- 34: Netzwerk mit Blockchain
- 36: OCU/Fahrzeug
- 38: Backend
- 41: Updatejob vom Backend anfordern
- 42: Updatejob bereitstellen
- 43: Aufruf Netzwerkvarianten
- 44: Konfiguration dokumentieren
- 45: ORU-Update vorhanden?
- 46: Beginn Downloadprozess
- 47: Abbruch ORU Prozess
- 48: Anzeige über HMI-Download starten
- 49: Abbruch ORU-Prozess
- 50: Daten als Hash ablegen
- 100: Fahrzeug
- 200: Backend

## Patentansprüche

1. Verfahren (10) zum Generieren einer Kennung für einen Ausrüstungszustand eines Fahrzeugs, mit
Bestimmen (12) einer ersten Information über ein oder mehrere vorhandene Softwarekomponenten und deren Softwareversionen;
Bestimmen (14) einer zweiten Information über ein oder mehrere vorhandene Hardwarekomponenten und deren Hardwareversionen;
Generieren (16) eines Hashwertes basierend auf der ersten Information, der zweiten Information und einem Softwareinhalt der ein oder mehreren Softwarekomponenten; und Bereitstellen (18) des Hashwertes als Kennung für den Ausrüstungszustand des Fahrzeuges,
ferner umfassend Speichern des Hashwertes in einer dezentralen Datenbank,
dadurch charakterisert, dass
das Speichern in einem mehrdimensionalen Graphen durchgeführt wird.

2. Verfahren gemäß Anspruch 1, wobei die dezentrale Datenbank einer Datenbank entsprechend einer Distributed Ledger Technologie entspricht.

3. Verfahren gemäß einem der Ansprüche 1 bis 2, wobei das Generieren des Hashwertes ferner auf einem oder mehreren Elementen der Gruppe von einer Fahrzeugkonfiguration, einem Zeitpunkt der Generierung, einem Fahrzeugparameter, einer maximalen Höchstgeschwindigkeit, einer Aktivierung einer adaptiven Abstandskontrolle, und einer Aktivierung eines fahrzeugbezogenen Dienstes basiert.

4. Verfahren gemäß einem der Ansprüche 2 bis 3, wobei das Speichern eindeutig ist und Änderungen an den gespeicherten Daten über eine Verifikation des Hashwertes detektierbar sind.

5. Verfahren gemäß einem der Ansprüche 2 bis 4, wobei das Speichern ein Verteilen identischer Kopien der Kennung in einem Netzwerk mit mehreren Teilnehmern umfasst.

6. Verfahren gemäß einem der Ansprüche 1 bis 5, ferner umfassend Verifizieren eines Ausrüstungszustands des Fahrzeugs durch Verifizieren der generierten Kennung mit einer von dem Fahrzeug bereitgestellten Kennung.

7. Verfahren gemäß Anspruch 6, wobei das Verifizieren des Ausrüstungszustands bei jedem Start des Fahrzeugs durchgeführt wird.

8. Computerprogramm zur Durchführung eines der Verfahren nach einem der Ansprüche 1 bis 7, wenn das Computerprogramm auf einem Computer, einem Prozessor, oder einer programmierbaren Hardwarekomponente abläuft.

9. Vorrichtung mit einem Kontrollmodul, das ausgebildet ist, um eines der Verfahren der Ansprüche 1 bis 7 durchzuführen.

10. Fahrzeug (100) mit einer Vorrichtung gemäß Anspruch 9.

11. Netzwerkkomponente (200) mit einer Vorrichtung gemäß Anspruch 9.

12. System mit einem Fahrzeug (100) gemäß Anspruch 10 und einer Netzwerkkomponente (200) gemäß Anspruch 11.

## Claims

1. A method (10) for generating an identifier for an equipment state of a vehicle, comprising
determining (12) first information about one or more available software components and their software versions;
determining (14) second information about one or more available hardware components and their hardware versions;
generating (16) a hash value based on the first information, the second information, and a software content of the one or more software components; and
providing (18) the hash value as an identifier for the equipment state of the vehicle,
further comprising storing the hash value in a decentralized database,
**characterized in that**
the storage is performed in a multidimensional graph.

2. The method according to claim 1, wherein the decentralized database corresponds to a database corresponding to distributed ledger technology.

3. The method according to either of claims 1 to 2, wherein the generation of the hash value is further based on one or more elements of the group consisting of a vehicle configuration, a time of generation, a vehicle parameter, a maximum speed, an activation of adaptive distance control, and an activation of a vehicle-related service.

4. The method according to either of claims 2 to 3, wherein the storage is unique and changes to the stored data can be detected via a verification of the hash value.

5. The method according to any of claims 2 to 4, wherein the storage comprises distributing identical copies of the identifier in a network having a plurality of subscribers.

6. The method according to any of claims 1 to 5, further comprising verifying an equipment state of the vehicle by verifying the generated identifier with an identifier provided by the vehicle.

7. The method according to claim 6, wherein the verification of the equipment state is performed each time the vehicle is started.

8. A computer program for carrying out one of the methods according to any of claims 1 to 7 when the computer program runs on a computer, a processor, or a programmable hardware component.

9. A device comprising a control module which is designed to carry out one of the methods of claims 1 to 7.

10. A vehicle (100) comprising a device according to claim 9.

11. A network component (200) comprising a device according to claim 9.

12. A system comprising a vehicle (100) according to claim 10 and a network component (200) according to claim 11.

## Revendications

1. Procédé (10) pour la génération d'un identificateur pour un état d'équipement d'un véhicule, comportant
la détermination (12) d'une première information sur un ou plusieurs composants logiciels disponibles et leurs versions de logiciel ;
la détermination (14) d'une seconde information sur un ou plusieurs composants matériels disponibles et leurs versions de matériel ;
la génération (16) d'une valeur de hachage sur la base de la première information, de la seconde information et d'un contenu logiciel du ou des composants logiciels ; et la mise à disposition (18) de la valeur de hachage en tant qu'identificateur pour l'état d'équipement du véhicule,
comprenant en outre la mémorisation de la valeur de hachage dans une base de données décentralisée, **caractérisé en ce que** la mémorisation est réalisée dans un graphe en plusieurs dimensions.

2. Procédé selon la revendication 1, dans lequel la base de données décentralisée correspond à une base de données correspondant à une technologie de registres distribués.

3. Procédé selon l'une des revendications 1 à 2, dans lequel la génération de la valeur de hachage se base en outre sur un ou plusieurs éléments du groupe constitué d'une configuration de véhicule, d'un instant de la génération, d'un paramètre de véhicule, d'une vitesse maximale, d'une activation d'un contrôle de distance adaptatif et d'une activation d'un service lié au véhicule.

4. Procédé selon l'une des revendications 2 à 3, dans lequel la mémorisation est sans équivoque et des modifications sur des données mémorisées peuvent être détectées par l'intermédiaire d'une vérification de la valeur de hachage.

5. Procédé selon l'une des revendications 2 à 4, dans lequel la mémorisation comprend une distribution de copies identiques de l'identificateur dans un réseau comportant plusieurs abonnés.

6. Procédé selon l'une des revendications 1 à 5, comprenant en outre la vérification d'un état d'équipement du véhicule par vérification de l'identificateur généré avec un identificateur mis à disposition par le véhicule.

7. Procédé selon la revendication 6, dans lequel la vérification de l'état d'équipement est réalisé à chaque démarrage du véhicule.

8. Programme informatique pour la réalisation d'un des procédés selon l'une des revendications 1 à 7, lorsque le programme informatique est exécuté sur un ordinateur, un processeur ou un composant matériel programmable.

9. Dispositif comportant un module de contrôle, qui est conçu pour réaliser un des procédés des revendications 1 à 7.

10. Véhicule (100) comportant un dispositif selon la revendication 9.

11. Composant de réseau (200) comportant un dispositif selon la revendication 9.

12. Système comportant un véhicule (100) selon la revendication 10 et un composant de réseau (200) selon la revendication 11.
